# EUROPÄISCHE PATENTANMELDUNG

(11) **EP 1 382 577 A2**
(43) Veröffentlichungstag der Anmeldung: **21.01.2004**
(21) Anmeldenummer: 03450165.0
(22) Anmeldetag: 03.07.2003
(51) Int. Cl.: C02F 3/30

(54) **Verfahren und Vorrichtung zur Reinigung von Abwasser mit einem Denitrifikationsbecken in einem Belüftungsbecken**

(30) Priorität: 09.07.2002 AT 10392002
(71) Anmelder: Beisteiner, Ernst, 00-740 Warschau (PL)
(72) Erfinder: Beisteiner, Ernst, 00-740 Warschau (PL)
(74) Vertreter: Babeluk, Michael, Dipl.-Ing. Mag.

(57) **Zusammenfassung**

Die Erfindung betrifft ein Verfahren zur Reinigung von Abwasser, bei dem das Abwasser abwechselnd einer Nitrifikation in einem Belüftungsbecken (1), bei der über Belüftungskörper (8), die im unteren Bereich des Belüftungsbeckens (1) angeordnet sind, Luft eingeblasen wird, und einer Denitrifikation in einem Denitrifikationsbecken (2) unter anaeroben Bedingungen unterworfen wird. Eine erhöhte Reinigungsleistung und eine erhöhte Flexibilität werden dadurch erreicht, dass die Denitrifikation in einem in dem Belüftungsbecken (1) vertikal beweglichen und gegenüber diesem seitlich abgeschlossenen Denitrifikationsbecken (2) durchgeführt wird, wenn sich das Denitrifikationsbecken (2) in einer oberen Stellung befindet, in der eine Überströmkante (6) des Denitrifikationsbeckens (2) oberhalb des Wasserspiegels (7) in dem Belüftungsbecken (1) liegt, und dass eine Spülung des Denitrifikationsbeckens (2) in einer unteren Stellung des Denitrifikationsbeckens stattfindet, in der die Überströmkante (6) unterhalb des Wasserspiegels (7) in dem Belüftungsbecken (1) liegt.

## Beschreibung

Die Erfindung betrifft ein Verfahren zur Reinigung von Abwasser gemäß dem Oberbegriff von Patentanspruch 1.

Wesentliche Bestandteile von Kläranlagen zur Reinigung von Abwasser sind Denitrifikationsbecken, in denen die zu reinigenden Abwässer in einem anaeroben Bereich einen Abbau von Nitrat unterzogen werden. Üblicherweise sind diese Denitrifikationsbereiche als separate Becken ausgeführt. Um einen Denitrifikationseffekt zu erzielen, ist es notwendig, eine Rezirkulation vom Belüftungsbecken zum Denitrifikationsbecken durchzuführen. Die Rezirkulationsmenge kann bis zu 400% der Zulaufmenge in die Kläranlage betragen, dies ist abhängig vom Nitratgehalt im Zulauf. Für die Rezirkulation werden im Normalfall Pumpen oder Förderschnecken eingesetzt. Um eine gleichmäßige Denitrifikation im gesamten Becken zu erreichen, ist im Allgemeinen die Durchmischung mit Mixern oder anderen mechanischen Vorrichtungen notwendig.

Besonders bei Kläranlagen geringerer Größe ist es jedoch eine Forderung, weitgehende Wartungsfreiheit zu erreichen. Daher sind jegliche mechanische Antriebe unerwünscht, und es wird nach Möglichkeit ausschließlich mit der in jedem Fall verfügbaren Druckluftversorgung gearbeitet.

Aus der EP 0 033 113 A sind ein Verfahren und eine Vorrichtung zur Reinigung von Abwasser bekannt, bei denen zwischen einem Nitrifikationsbecken und einem Denitrifikationsbecken eine Umwälzbewegung durchgeführt wird, die im Wesentlichen durch den Dichteunterschied zwischen dem Abwasser in den beiden Becken induziert ist. Die Umwälzbewegung erfolgt jedoch weitgehend unkontrolliert, auch wenn die Öffnungsquerschnitte durch Einlegen von Balken an die Gegebenheiten abgepasst werden.

Aufgabe der vorliegenden Erfindung ist es, ein Verfahren der oben beschriebenen Art anzugeben, das eine optimale Reinigungswirkung mit minimalem apparativem Aufwand erzielt. Insbesondere soll der Einsatz mechanischer Antriebe vermieden werden, und auch die Notwendigkeit, Abwässer zwischen verschiedenen Becken umzupumpen, soll vermieden werden. Eine weitere Aufgabe der Erfindung ist es, möglichst kompakte Abmessungen zu erzielen, so dass beispielsweise bei der Nachrüstung bestehender Anlagen eine Kapazitätssteigerung erzielt werden kann. Dabei soll auch bei stark schwankendem Abwasseranfall eine optimale Reinigungswirkung erzielt werden.

Weiters ist es eine Aufgabe der vorliegenden Erfindung, eine Vorrichtung anzugeben, die die oben beschriebenen Forderungen erfüllt.

Erfindungsgemäß werden diese Aufgaben durch ein Verfahren nach Patentanspruch 1 gelöst.

Ein wesentlicher Vorteil der vorliegenden Erfindung besteht darin, dass einerseits eine notwendige Spülung des Denitrifikationsbeckens ohne das Erfordernis von Pumpen oder dgl. erzielt werden kann, indem lediglich der Dichteunterschied zwischen dem belüfteten Abwasser im Belüftungsbecken und dem nicht belüfteten Abwasser im Denitrifikationsbecken ausgenützt wird, andererseits jedoch der Wechsel zwischen Denitrifikationsphase und Spülphase gesteuert und kontrollierbar erfolgt.

Vorzugsweise ist vorgesehen, dass die Denitrifikation in einem in dem Belüftungsbecken vertikal beweglichen und gegenüber diesem seitlich abgeschlossenen Denitrifikationsbecken durchgeführt wird, wenn sich das Denitrifikationsbecken in einer oberen Stellung befindet, in der die Überströmkante des Denitrifikationsbeckens oberhalb des Wasserspiegels in dem Belüftungsbecken liegt, und dass eine Spülung des Denitrifikationsbeckens in einer unteren Stellung des Denitrifikationsbeckens stattfindet, in der die Überströmkante unterhalb des Wasserspiegels in dem Belüftungsbecken liegt. Dabei ist durch die vertikale Bewegung des Denitrifikationsbeckens eine Steuerung der Denitrifikation durch die Anzahl und Dauer der Absenkzyklen möglich. Ein Grundgedanke dieser Ausführungsvariante der vorliegenden Erfindung ist es, während der Denitrifikationsphase das Denitrifikationsbecken im Belüftungsbecken aufschwimmen zu lassen, um die Verbindung der beiden Becken an der Oberseite zu unterbinden. Obwohl nach wie vor eine hydraulische Verbindung an der Unterseite des Denitrifikationsbeckens besteht, findet in der Praxis praktisch kein Austausch zwischen den beiden Becken statt. Auf diese Weise kann gleichzeitig mit der Belüftung des Abwassers im Belüftungsbecken eine Denitrifikation im Denitrifikationsbecken unter anaeroben Bedingungen durchgeführt werden. Nach einer Denitrifikationsphase ist es notwendig, einen Wasseraustausch zwischen den beiden Becken herbeizuführen. Diese Spülung wird durch Absenken des Denitrifikationsbeckens erreicht, wobei durch den Dichteunterschied zwischen dem Luft enthaltenden Abwasser des Belüftungsbeckens und dem keine Luft enthaltendem Wasser im Denitrifikationsbecken eine Zirkulationsströmung hervorgerufen wird, bei der das Abwasser im Belüftungsbecken nach oben strömt, über die Überströmkante in das Denitrifikationsbecken einströmt und dort nach unten strömt. Auf diese Weise wird neben der Vermischung des Abwassers ein Austrag von Schlamm erreicht, der sich während der Denitrifikationsphase in dem Denitrifikationsbecken gebildet hat.

Um bei der Spülung eine effiziente Umwälzung zu erreichen, wird eine größere Luftmenge eingeblasen als bei der normalen Belüftung, die gleichzeitig mit der Denitrifikation stattfindet. Ein weiterer Vorteil der stark erhöhten Luftmenge während der Spülung besteht darin, dass unter günstigen Voraussetzungen jegliche Antriebsvorrichtung für das Denitrifikationsbecken entfallen kann. In diesem Fall wird das Denitrifikationsbecken so tariert, dass es bei normaler Belüftung aufgrund seiner Dichte im Belüftungsbecken aufschwimmt, so dass die Überströmkante oberhalb der Wasseroberfläche ist. Bei verstärkter Belüftung sinkt durch den Luftanteil im Wasser die Dichte des Abwassers im Belüftungsbecken so stark ab, dass das Denitrifikationsbecken auf dem Boden des Belüftungsbeckens absinkt und die Spülung ermöglicht, da sich die Überströmkante dann unterhalb der Wasseroberfläche befindet. Dieser Effekt wird zusätzlich dadurch begünstigt, dass mit zunehmendem Luftanteil die Wasseroberfläche angehoben ist.

Falls der oben beschriebene Effekt nicht ausreicht, um die sichere Bewegung des Denitrifikationsbeckens zu erreichen, ist vorzugsweise vorgesehen, dass das Denitrifikationsbecken pneumatisch angehoben und abgesenkt wird. Das Heben kann beispielsweise dadurch erfolgen, dass Luftkissen aufgeblasen werden, auf die sich das Denitrifikationsbecken abstützt. Alternativ dazu ist es auch möglich, dass die Denitrifikationsbecken Auftriebskörper aufweisen, die zur Denitrifikation mit Luft gefüllt werden.

Eine besonders gute Anpassung des Reinigungsverfahrens an stark schwankende Abwassermengen kann dadurch erreicht werden, dass mehrere Denitrifikationsbecken in dem Belüftungsbecken angeordnet sind und dass die Spülung der einzelnen Denitrifikationsbecken einzeln nacheinander erfolgt. Das Verfahren wird dabei so geführt, dass je nach Abwasseranfall nur in einem Teil der verschiedenen Denitrifikationsbecken eine Denitrifikation stattfindet, während die übrigen Becken gespült werden. Ein zusätzlicher Vorteil dieses Verfahrens besteht darin, dass der Eintrag der beim Denitrifikationsprozess entstehenden Reaktionsprodukte in das Belüftungsbecken vergleichmäßigt wird, was den Wirkungsgrad erhöht.

Es ist gemäß der Erfindung auch möglich, dass während der Denitrifikationsphase der Wasserspiegel im Belüftungsbecken angehoben wird und während der Spülung des Denitrifikationsbeckens abgesenkt wird. Dies kann in einfacher Weise durch erfolgen, dass zwischen zwei Abflussöffnungen unterschiedlicher Höhe umgeschaltet wird. Das Absenken des Wasserspiegels während der Spülung erfolgt dabei gegenläufig zu dem ansonsten erfolgenden Anstieg des Wasserspiegels, der durch den erhöhten Luftanteil bewirkt wird.

Weiters betrifft die vorliegende Erfindung eine Vorrichtung zur Reinigung von Abwasser mit einem Belüftungsbecken, in dessen unteren Bereich Belüftungskörper angeordnet sind und mindestens einem Denitrifikationsbecken, das mit dem Belüftungsbecken im unteren Bereich in Strömungsverbindung steht und im oberen Bereich über eine Überströmkante in Strömungsverbindung bringbar ist.

Erfindungsgemäß sind Mittel vorgesehen, die während einer Denitrifikationsphase die Überströmkante des Denitrifikationsbeckens oberhalb des Wasserspiegels im Belüftungsbecken halten, um eine Zirkulation zwischen dem Belüftungsbecken und dem Denitrifikationsbecken zu verhindern, und die bei einer zwischen aufeinanderfolgenden Denitrifikationsphasen durchgeführten Spülung des Denitrifikationsbeckens den Wasserspiegel im Belüftungsbecken oberhalb der Überströmkante des Denitrifikationsbeckens halten, um eine durch Dichteunterschiede induzierte Strömung zwischen dem Belüftungsbecken und dem Denitrifikationsbecken zu bewirken. Eine Vorrichtung dieser Art besitzt einen sehr einfachen Aufbau und ermöglicht dennoch bei geringem Platzbedarf eine hohe Reinigungsleistung.

Besonders vorteilhaft ist es, wenn das Denitrifikationsbecken vertikal beweglich im Belüftungsbecken angeordnet ist, dass es unten offen gegenüber dem Belüftungsbecken ist und im oberen Bereich eine Überströmkante aufweist, über die in einer unteren Stellung des Denitrifikationsbeckens eine Strömungsverbindung zu dem Belüftungsbecken hergestellt ist. Dadurch kann eine besonders zuverlässige Steuerung des Reinigungsverfahrens erreicht werden.

In einer besonders begünstigten Ausführungsvariante ist vorgesehen, dass das Denitrifikationsbecken Füllkörper aufweist, die im Inneren angeordnet sind. Auf diese Weise können sich die Mikroorganismen auf den Füllkörpern verteilt anlagern und bleiben auch während der Spülphase weitgehend im Denitrifikationsbecken erhalten und werden nicht in das Nitrifikationsbecken ausgetragen. Dadurch stehen diese Bakterien nach der Spülung sofort wieder für die anschließende Denitrifikationsphase zur Verfügung. Es wird lediglich das denitrifizierte Abwasser und eine gewisse Schlammmenge in das Belüftungsbecken eingeführt, um dort Nährstoff für die dort befindliche Flora zu bilden, was den Wirkungsgrad der Umsetzung entsprechend erhöht.

Eine besondere Flexibilität wird erreicht, wenn unterhalb des Denitrifikationsbecken zusätzliche Belüftungskörper vorgesehen sind. Auf diese Weise kann auch das Denitrifikationsbecken als Belüftungsbecken verwendet werden, was insbesondere dann vorteilhaft ist, wenn außergewöhnliche Belastungsspitzen zu verkraften sind. Besonders vorteilhaft ist eine solche Lösung dann, wenn mehrere Denitrifikationsbecken vorhanden sind, von denen jeweils nur ein Teil als Belüftungsbecken verwendet wird.

In der Folge wird die vorliegende Erfindung anhand der in den Figuren dargestellten Ausführungsbeispiele näher erläutert. Es zeigen:
- Fig. 1: eine erste Ausführungsvariante der Erfindung in einem vertikalen Schnitt während der Denitrifikationsphase;
- Fig. 2: die Ausführungsvariante von Fig. 1 in der Spülphase; und
- Fig. 3: eine Draufsicht auf eine weitere Ausführungsvariante der Erfindung.

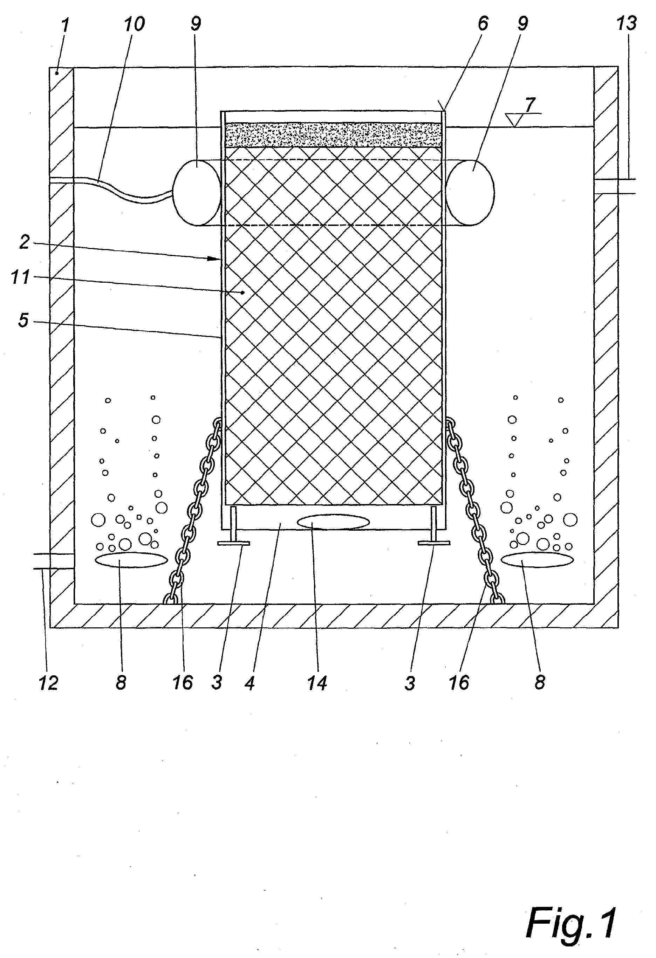

Fig. 1 zeigt ein Belüftungsbecken 1, in dem ein Denitrifikationsbecken 2 beweglich angeordnet ist. Das Denitrifikationsbecken 2 besitzt Standfüße 3 und an der Unterseite eine Öffnung 4, die sich über einen Teil oder den gesamten Querschnitt des Denitrifikationsbeckens 2 erstreckt. Die Seitenwände 5 sind geschlossen. Im oberen Bereich ist eine Überströmkante 6 vorgesehen, die sich in dem in Fig. 1 gezeigten Zustand während der Denitrifikationsphase oberhalb des Wasserspiegels 7 im Belüftungsbecken 1 erstreckt. Das Denitrifikationsbecken 2 ist somit in dem Zustand von Fig. 1 lediglich über die Öffnung 4 an der Unterseite mit dem Belüftungsbecken 1 hydraulisch verbunden, so dass keine Durchströmung des Denitrifikationsbeckens 2 stattfindet.

An der Unterseite des Belüftungsbeckens 1 sind Belüftungskörper 8 vorgesehen, um die gleichzeitig mit der Denitrifikationsphase stattfindende Belüftung im Belüftungsbecken durchzuführen.

An der Außenseite des Denitrifikationsbeckens 2 sind Auftriebskörper 9 angebracht, die über eine Leitung 10 mit Luft gefüllt werden können, um den Auftrieb herzustellen, der erforderlich ist, dass die Überströmkante 6 oberhalb des Wasserspiegels 7 liegt. Das Innere des Denitrifikationsbeckens 2 ist vollständig mit Füllkörperpackungen 11 ausgefüllt, die ein Substrat für die erforderlichen Mikroorganismen darstellen.

Das Abwasser wird kontinuierlich oder diskontinuierlich über eine Einströmöffnung 12 in das Belüftungsbecken 1 eingeführt und über eine Überströmöffnung 13 abgezogen. Unterhalb des Denitrifikationsbeckens 2 sind weitere Belüftungskörper 14 vorgesehen, die lediglich dann aktiviert werden, wenn das Denitrifikationsbecken 2 ebenfalls als Belüftungsbecken betrieben werden soll.

Ketten 16 verankern das Denitrifikationsbecken 2 am Boden des Belüftungsbeckens 1, um dieses an seinen Platz zu halten und die vertikale Bewegung nach oben zu begrenzen.

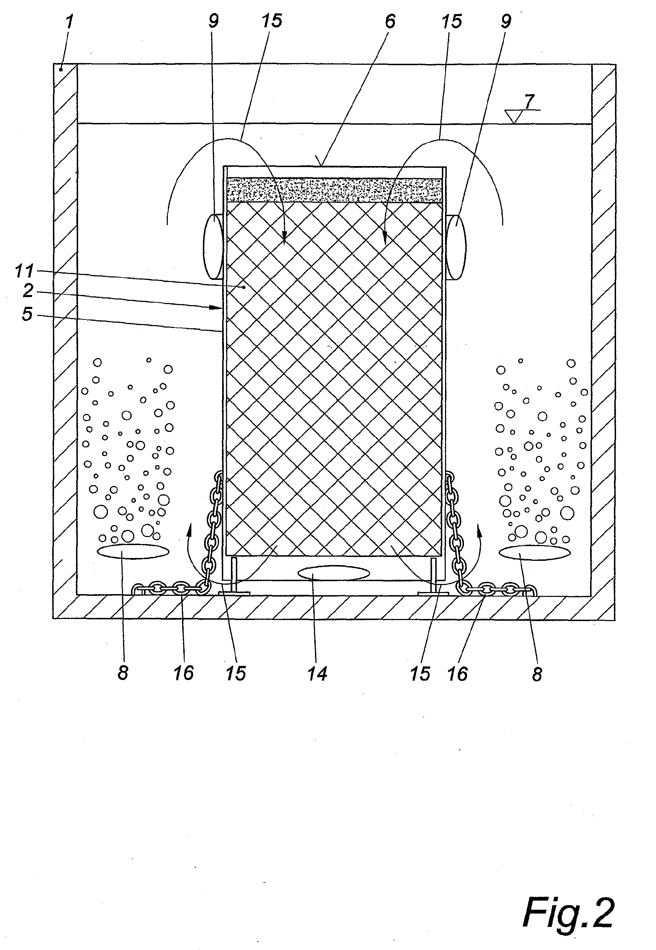

In der Stellung von Fig. 2 ist das Denitrifikationsbecken 2 abgesenkt, so dass die Überströmkante unterhalb der Wasseroberfläche 7 liegt. Durch die aus den Belüftungskörpern 8 verstärkt ausgeblasene Luft wird ein Dichteunterschied des Abwassers im Belüftungsbecken 1 in Bezug auf das Abwasser im Denitrifikationsbecken 2 erzeugt, der eine Konvektionsströmung hervorruft, wie sie mit Pfeilen 15 angedeutet ist. Wie oben beschrieben, kann die Verringerung der Dichte durch die verstärkte Belüftung schon bewirken, dass das Denitrifikationsbecken 2 absinkt, welcher Effekt jedoch jedenfalls dadurch gesichert werden kann, dass die Auftriebskörper 9 des Denitrifikationsbeckens 2 geflutet werden. Durch die Strömung entsprechend den Pfeilen 15 wird der durch die Denitrifikationsphase gebildete Schlamm aus dem Denitrifikationsbecken 2 teilweise in das Belüftungsbecken 1 transportiert und dort durch die Luftblasen verwirbelt. Auf diese Weise wird die Umsetzung im Belüftungsbecken verbessert.

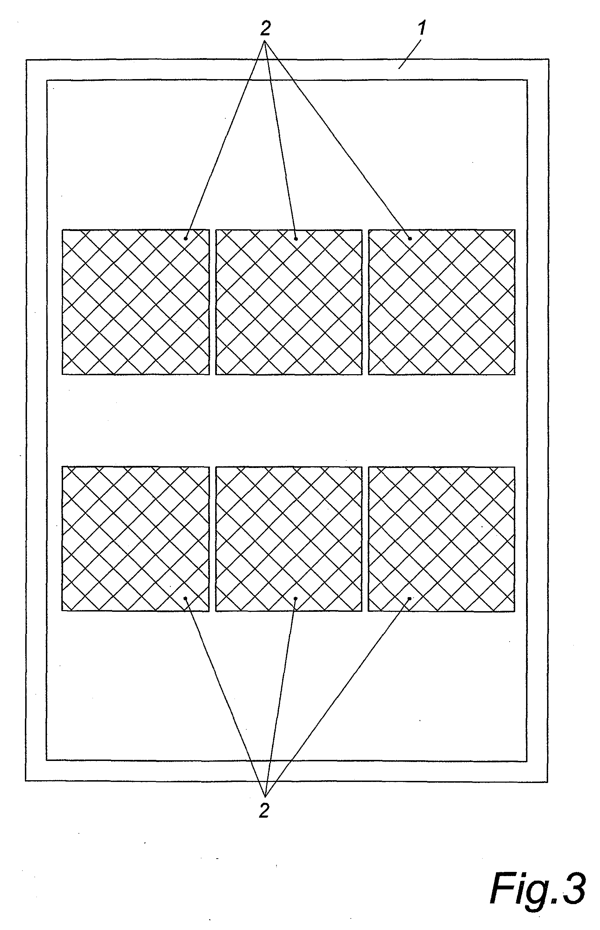

Fig. 3 zeigt eine weitere Ausführungsvariante der Erfindung in einer Draufsicht, bei der in einem Belüftungsbecken 1 insgesamt sechs Denitrifikationsbecken 2 angeordnet sind, die unabhängig voneinander beweglich sind. Auf diese Weise kann beispielsweise ein Betrieb realisiert werden, bei dem jeweils nur in einem einzigen Becken eine Denitrifikation stattfindet, während sich die übrigen Denitrifikationsbecken 2 im Spülbetrieb befinden. Danach wird die Denitrifikation im nächsten Denitrifikationsbecken 2 durchgeführt, usw. Alternativ dazu ist es jedoch auch möglich, jeweils gleichzeitig zwei, drei oder mehrere Denitrifikationsbecken 2 im Denitrifikationsmodus zu betreiben.

Durch diese Ausbildung kann eine erhöhte Flexibilität erreicht werden, die einen optimalen Wirkungsgrad in einem breiten Bereich von Betriebszuständen ermöglicht.

Durch die Länge der einzelnen Phasen des Verfahrens und die Stärke der Belüftung kann der Abwasserbehandlungsvorgang optimiert werden. Insbesondere kann durch die Dauer der Spülphasen der Austrag von Schlamm aus dem Denitrifikationsbecken 2 reguliert werden.

## Patentansprüche

1. Verfahren zur Reinigung von Abwasser, bei dem das Abwasser abwechselnd einer Nitrifikation und einer Denitrifikation unterworfen wird, wobei die Nitrifikation in einem Belüftungsbecken (1) stattfindet, in dem über Belüftungskörper (8), die im unteren Bereich des Belüftungsbeckens (1) angeordnet sind, Luft eingeblasen wird, und wobei die Denitrifikation in einem Denitrifikationsbecken (2) unter anaeroben Bedingungen stattfindet, und wobei zwischen dem Belüftungsbecken (1) und dem Denitrifikationsbecken (2) im unteren Bereich stets eine Strömungsverbindung aufrecht gehalten wird und im oberen Bereich eine Strömungsverbindung über eine Überströmkante möglich ist, **dadurch gekennzeichnet, dass** während einer Denitrifikationsphase die Überströmkante (6) des Denitrifikationsbeckens (2) oberhalb des Wasserspiegels im Belüftungsbecken (1) gehalten wird, um eine Zirkulation zwischen dem Belüftungsbecken (1) und dem Denitrifikationsbecken (2) zu verhindern, und dass zwischen aufeinanderfolgenden Denitrifikationsphasen eine Spülung des Denitrifikationsbeckens (2) durchgeführt wird, bei der der Wasserspiegel im Belüftungsbecken (1) oberhalb der Überströmkante (6) des Denitrifikationsbeckens (2) gehalten wird, um eine durch Dichteunterschiede induzierte Strömung zwischen dem Belüftungsbecken (1) und dem Denitrifikationsbecken (2) zu bewirken.

2. Verfahren nach Anspruch 1, **dadurch gekennzeichnet, dass** die Denitrifikation in einem in dem Belüftungsbecken (1) vertikal beweglichen und gegenüber diesem seitlich abgeschlossenen Denitrifikationsbecken (2) durchgeführt wird, wenn sich das Denitrifikationsbecken (2) in einer oberen Stellung befindet, in der die Überströmkante (6) des Denitrifikationsbeckens (2) oberhalb des Wasserspiegels (7) in dem Belüftungsbecken (1) liegt, und dass eine Spülung des Denitrifikationsbeckens (2) in einer unteren Stellung des Denitrifikationsbeckens (2) stattfindet, in der die Überströmkante (6) unterhalb des Wasserspiegels (7) in dem Belüftungsbecken (1) liegt.

3. Verfahren nach einem der Ansprüche 1 oder 2, **dadurch gekennzeichnet, dass** bei der Spülung Abwasser über die Überströmkante (6) von oben in das Denitrifikationsbecken (2) einströmt und dieses von oben nach unten durchströmt und dass bei der Spülung eine größere Luftmenge in das Belüftungsbecken (1) eingeblasen wird als bei der Nitrifikation.

4. Verfahren nach einem der Ansprüche 1 bis 4, **dadurch gekennzeichnet, dass** mehrere Denitrifikationsbecken (2) in dem Belüftungsbecken (1) angeordnet sind und dass die Spülung der einzelnen Denitrifikationsbecken (2) einzeln nacheinander erfolgt.

5. Verfahren nach einem der Ansprüche 2 bis 4, **dadurch gekennzeichnet, dass** das Denitrifikationsbecken (2) pneumatisch angehoben und abgesenkt wird, wobei die Denitrifikationsbecken (2) vorzugsweise Auftriebskörper (9) aufweisen, die zur Denitrifikation mit Luft gefüllt werden.

6. Verfahren nach einem der Ansprüche 1 bis 5, **dadurch gekennzeichnet, dass** während der Denitrifikationsphase der Wasserspiegel im Belüftungsbecken (1) angehoben wird und während der Spülung des Denitrifikationsbeckens (2) abgesenkt wird.

7. Vorrichtung zur Reinigung von Abwasser mit einem Belüftungsbecken (1), in dessen unteren Bereich Belüftungskörper (8) angeordnet sind und mindestens einem Denitrifikationsbecken (2), das mit dem Belüftungsbecken (1) im unteren Bereich in Strömungsverbindung steht und im oberen Bereich über eine Überströmkante (6) in Strömungsverbindung bringbar ist, **dadurch gekennzeichnet, dass** Mittel vorgesehen sind, die während einer Denitrifikationsphase die Überströmkante (6) des Denitrifikationsbeckens (2) oberhalb des Wasserspiegels im Belüftungsbecken (1) halten, um eine Zirkulation zwischen dem Belüftungsbecken (1) und dem Denitrifikationsbecken (2) zu verhindern, und die bei einer zwischen aufeinanderfolgenden Denitrifikationsphasen durchgeführten Spülung des Denitrifikationsbeckens (2) den Wasserspiegel im Belüftungsbecken (1) oberhalb der Überströmkante (6) des Denitrifikationsbeckens (2) halten, um eine durch Dichteunterschiede induzierte Strömung zwischen dem Belüftungsbecken (1) und dem Denitrifikationsbecken (2) zu bewirken.

8. Vorrichtung nach Anspruch 7, **dadurch gekennzeichnet, dass** das Denitrifikationsbecken (2) vertikal beweglich im Belüftungsbecken (1) angeordnet ist, dass es unten offen gegenüber dem Belüftungsbecken (1) ist und im oberen Bereich eine Überströmkante (6) aufweist, über die in einer unteren Stellung des Denitrifikationsbeckens (2) eine Strömungsverbindung zu dem Belüftungsbecken (1) hergestellt ist.

9. Vorrichtung nach einem der Ansprüche 7 oder 8, **dadurch gekennzeichnet, dass** mehrere Denitrifikationsbecken (2) in dem Belüftungsbecken (1) angeordnet sind, die vorzugsweise unabhängig voneinander vertikal bewegbar sind.

10. Vorrichtung nach Anspruch 7 bis 9, **dadurch gekennzeichnet, dass** das Denitrifikationsbecken (2) pneumatisch anhebbar und absenkbar ist, wobei das Denitrifikationsbecken (2) vorzugsweise Auftriebskörper (9) aufweist, die zum Anheben mit Luft befüllbar sind.

11. Vorrichtung nach einem der Ansprüche 7 bis 10, **dadurch gekennzeichnet, dass** das Denitrifikationsbecken (2) einen Füllkörper (11) aufweist.

12. Vorrichtung nach einem der Ansprüche 7 bis 11, **dadurch gekennzeichnet, dass** unterhalb des Denitrifikationsbeckens (2) zusätzliche Belüftungskörper vorgesehen sind.
